# EUROPEAN PATENT APPLICATION

(11) **EP 2 712 719 A1**
(43) Date of publication of application: **02.04.2014**
(21) Application number: 13184659.4
(22) Date of filing: 17.09.2013
(51) Int. Cl.: B29C 33/50, B29C 45/40, B29C 45/43, B28B 7/10

(54) **A tool for curing and ejecting a component**

(30) Priority: 27.09.2012 GB 201217245
(71) Applicant: AIRBUS OPERATIONS LIMITED, Filton Bristol Bristol BS99 7AR (GB)
(72) Inventor: Sanderson, Timothy, Bristol, Bristol BS99 7AR (GB); Williams, Stephen, Bristol, Bristol BS99 7AR (GB); Price, Jonathan, Bristol, Bristol BS99 7AR (GB)
(74) Representative: Gregory, John David Charles

(57) **Abstract**

The invention provides a cure tool 10, the tool having a working face 11 for placing a component 20 to be cured upon, wherein the tool is provided with a channel 12 along a length of the working face of the tool. The tool may be further provided with an inflatable member 15 in a length of the channel. The invention also provides a method for curing a component, a component that has been cured by the method and an aircraft comprising one or more components that have been cured by the method.

## Description

### Background of the Invention

The present invention concerns cure tools. More particularly, but not exclusively, this invention concerns a cure tool having a working face for placing a component to be cured upon. The invention also concerns a method for curing a component, a component that has been cured by the method and an aircraft comprising one or more components that have been cured by the method.

Composite components are often manufactured by laying up composite layers onto a tool. The layed-up component and the tool are then placed in an autoclave to be cured. Alternatively, the tool and component may be placed in an oven or may be cured using a closed mould manufacturing system. The curing may take place using an Out of Autoclave (OoA) arrangement. Once curing has taken place, the tool and the cured component are often stuck together as a result of the previously "tacky" nature of the now cured component.

There are various methods in the prior art for releasing the component from the tool.

For example, small wooden or nylon wedges can be forced into a gap between the tool and the material to unstick them. A hammer can be used to help force the wedge in. However, this method is time consuming and risks damage to the component, both delamination locally to the wedges and also in terms of overloading the component.

Another example is to provide the tool with passages through the depth of the tool and injecting high pressure air through these passages. However, often the high pressure air simply seeks the easiest route out from between the tool and the component and does not significantly aid release of the component from the tool. This method does not work well with large components.

A further example of a release method involves using a multiple part tool. However, again this method does not work well with large components and increases the complexity of the manufacturing and assembly processes.

Another example involves having a frangible plug flush with the surface of the tool upon which the component is laid. Once cured, pressure in the form of a dowel pin (either manually or pneumatically), is applied to the frangible plug to push the component up in the region above the plug. A disadvantage of this method is that the presence of the frangible plug causes witness marks on the component. In addition, the dowel pin has only a localised effect on the releasing of the component and also, it can cause damage to the component.

A final example that will be mentioned here is the use of a cold atmosphere (such as in a refrigerator) to cause the two parts to shrink at different rates and release from each other. However, this can often only be done for small components and will only work if the tool and the component have different temperature/expansion coefficients.

The problem of being able to effectively release a component from a tool exists in relation to a variety of materials, not just for composites. In any situation where a liquid or "tacky" material is cured to become a solid component, the component may stick to the tool and need to be effectively released. For example, the issue exists not just for composite materials, but also for polymer materials and metallic material.

The present invention seeks to mitigate the above-mentioned problems. Alternatively or additionally, the present invention seeks to provide an improved cure tool and method of curing a component.

### Summary of the Invention

The present invention provides, according to a first aspect, a cure tool, the tool having a working face for placing a component to be cured upon, wherein the tool is provided with a channel along a length of the working face of the tool.

This allows an inflatable member to be accommodated in the channel to aid release of the cured component from the tool.

There may be more than one channel along the working face. One or more of the channels may have a bend in the channel and thus may run along more than one length of the working face of the tool. The one or more channels may be located on the tool such that, when the component is placed on the tool, the channels are located in between the Manufacturing Edge of Part (MEOP) and the Engineering Edge of Part (EEOP). This means that any witness marks caused on the component from the channels are only found in the part of the cured component that will not be used.

Alternatively, if it is deemed that the witness marks caused on the component are satisfactory, the one or more channels may be located on the tool such that, when the component is placed on the tool, at least part of the channels is located inside the Engineering Edge of Part (EEOP).

Preferably, the channel is an indentation in the working face of the tool. This minimises the impact of the presence of the channel, in terms of witness marks on the component being cured.

More preferably, the channel is shallow. In other words, the channel does not extend through the depth of the tool. This makes manufacture of the tool easier and cheaper. The channel may be a rounded channel. The channel may have tapered edges. This minimises the impact of the presence of the channel, in terms of witness marks on the component being cured.

Preferably, the tool is further provided with an inflatable member in a length of the channel. The inflatable member aids in releasing the component from the tool. The inflatable member may be inflatable by any medium, including liquid hydraulics. However, preferably, the inflatable member is inflatable by air. Preferably, the inflatable member is connected to an inflator or inflating means.

When using the term "deflated", this refers to any configuration of the inflatable member where it is at least partially deflated. It does not have to be fully deflated.

Preferably, when the inflatable member is deflated, the inflatable member protrudes above the working face of the tool by a first distance.

More preferably, when the inflatable member is deflated, the inflatable member fits in the channel such that it does not protrude above the working face of the tool and the first distance is zero. This means that the inflatable member has minimal impact on the component being cured and minimises the amount of witness marks caused.

Preferably, when the inflatable member is inflated, the inflatable member protrudes above the working face of the tool by a second distance, greater than the first distance. This second distance must be greater than the first distance and therefore must be greater than zero. This means that a portion of the inflatable member protrudes above the working face of the tool and thereby pushes on the component above and aids in the release of the component from the tool.

When using the term "inflated", this refers to any configuration of the inflatable member where it is at least partially inflated. It does not have to be fully inflated.

Preferably, the inflatable member is a flexible pipe.

More preferably, the flexible pipe is substantially cylindrical when inflated. This allows the flexible pipe to be accommodated well in a rounded channel.

Preferably, the flexible pipe has a shape such that a substantially flat portion of the pipe protrudes above the working face of the tool when inflated. This allows the inflatable member to push on the component over a larger area and therefore aid release of the component from the tool. The force from the inflatable member is also spread over a larger area, minimising local damage to the component.

Preferably, the channel is spaced apart from an edge of the working face. This allows the inflatable member to apply a force to the component away from the edges of the component and more efficiently aid release of the component from the tool.

According to a second aspect of the invention there is also provided a method for curing a component, comprising the steps of providing a cure tool having a working face and provided with a channel along a length of the working face, providing an inflatable member in a length of the channel, placing the component to be cured upon the working face of the tool, curing the component, inflating the inflatable member such that a portion of the inflatable member protrudes above the working face of the tool, thereby aiding release of the cured component from the working face of the tool.

According to a third aspect of the invention there is also provided a component that has been cured by the method described above. The component may be used in a variety of applications. For example, it may be used in skis, snowboards, boat parts and automotive vehicle parts.

Preferably, the component is a component for an aircraft. For example, the component may be used in the wings, fuselage, tail plane, or horizontal tail plane of an aircraft. The component may also be used for secondary structure, such as access panels and interiors.

According to a fourth aspect of the invention there is also provided an aircraft comprising one or more components as described above.

It will of course be appreciated that features described in relation to one aspect of the present invention may be incorporated into other aspects of the present invention. For example, the method of the invention may incorporate any of the features described with reference to the apparatus or product of the invention and *vice versa.*

### Description of the Drawings

Embodiments of the present invention will now be described by way of example only with reference to the accompanying schematic drawings of which:
Figure 1 shows a cross-sectional side view showing a tool according to a first embodiment of the invention, and a cured component on the tool; and
Figure 2 shows a cross-sectional side view pipe has been inflated and the component is released from the tool.

### Detailed Description

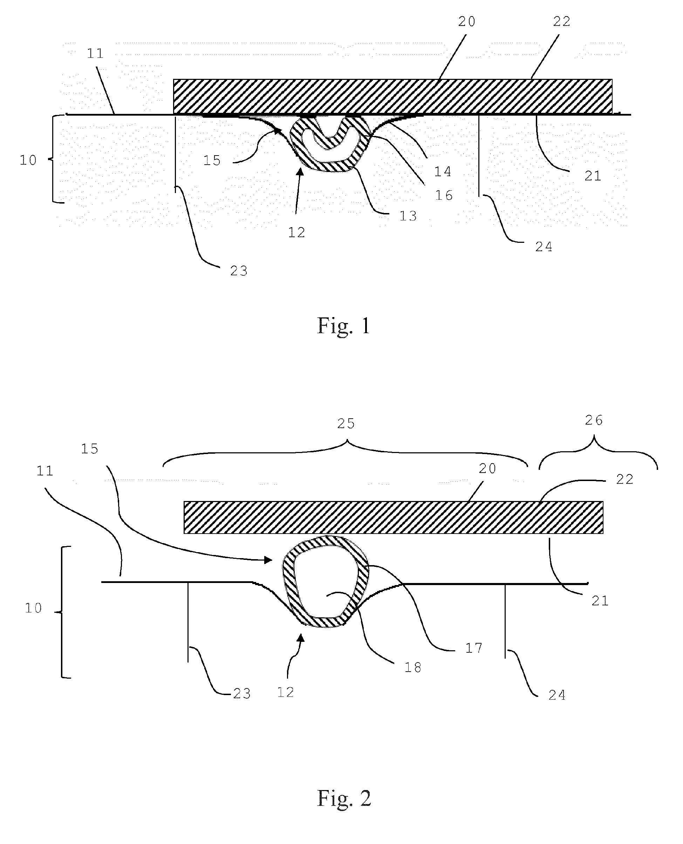

Figure 1 shows a cross-sectional side view showing a cure tool 10 according to a first embodiment of the invention, and a cured component 20 on the tool.

The tool 10 comprises a working face 11 up on which the component 20 has been placed. A lower surface 21 of the component 20 has been placed on the working face 11 of the tool 10 and an upper surface 22 is exposed.

There is a shallow channel 12 running along a length of the working face 11 of the tool 10. Figure 1 shows an end view of the channel 12. The channel 12 comprises a rounded bottom 13 and tapered sides 14, tapering up to the top surface of the working face 11 of the tool 10. The tapered edges 14 prevent damage to the component during the cure process and also during debulking, prior to the cure process.

Inside the channel 12 is an inflatable flexible pipe 15. The pipe 15 is made from fluorinated silicon. The pipe 15 has a diameter of 8mm.

Figure 1 shows the pipe 15 in its deflated state 16. As can be seen, in this state, the pipe 15 is crumpled to fit entirely within the channel 12 and it does not protrude above the working face 11 of the tool 10.

Figure 2 shows a cross-sectional side view showing the tool 10 and cured component 20 of Figure 1, after the pipe 15 has been inflated and the component 20 is released from the tool 10.

As can be seen in Figure 2, air 18 has been injected into the pipe 15 at a pressure of 1 bar and it has been inflated. Figure 2 shows the pipe 15 in its inflated state 17. In this state, the air 18 has pushed the pipe outwards 15 to expand it into a cylindrical shape. The top portion of the pipe protrudes above the working face 11 of the tool 10. As such, the pipe 15 has pushed on the lower surface 21 of the component 20 and has released the component from the tool 10.

Line 23 in the Figures, at one end of the component 20 marks the Manufacturing End of Part (MEOP). This marks the end of the part being manufactured at this curing stage. Line 24 in the Figures, inside of the channel 12, marks the Engineering End of Part (EEOP). This marks the end of the part that will be used in the final engineered part. Hence, it can be seen in Figure 2 that portion 25 of the component will be trimmed off and discarded and portion 26 will be used.

Any witness marks caused by the channel 12 and pipe 15 will be present on the component 20 in portion 25 and so will not be present in the final part to be used.

In use, the following steps are carried out:
1) the deflated pipe 16 is placed in the channel 12 of the tool 10 and it is ensured that the pipe 15 does not protrude above the working face 11 of the tool 10,
2) the component 20 to be cured is layed-up on the working face 11 of the tool 10,
3) the tool 10 and component 20 are placed inside a curing apparatus, such as an autoclave, and the component 20 is cured,
4) the tool 10 and cured component 20 are removed from the curing apparatus,
5) any manufacturing consumables are removed from the component 20 and tool 10,
6) the pipe 15 is inflated with air 18 into its inflated state 17 so that the top portion of the pipe 15 protrudes above the working face 11 of the tool 10. This causes the pipe 15 to push on the lower surface 21 of the component 20, prise the component 20 and tool 10 apart in a controlled manner without local damage to the component 20. Hence, the component 20 is released from the tool 10.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

In the embodiment described above, the channel 12 and inflatable pipe 15 are located in between the MEOP 23 and the EEOP 24. However, if it is deemed that the witness marks caused on the component are satisfactory, the channel 12 may be located on the tool such that at least part, and maybe all, of the channel is located inside the EEOP 24.

It is also possible to have any number of channels 12 in the tool 10. The channel(s) 12 may be any suitable shape, length, depth and width. For example, the channel(s) 12 may be square bottomed channels.

It is expected that most, if not all, of the channel(s) 12 in the tool 10 will be provided with a pipe 15 extending along substantially the length of the channel (12). The number and length of channel(s) 12 and pipe(s) 15 provided may be any number or length to provide a suitable density of coverage that sufficiently moves the cured component 20.

The pipe 15 (or pipes) may be made of any suitable flexible material, and may be any suitable size and shape. For example, the pipe may have a diameter from 6 to 10mm.

The pipe 15 (or pipes) may be inflated to any suitable pressure that sufficiently moves the cured component 20. The pipes 15 may be inflated substantially simultaneously or in any suitable sequence.

The tool and method described above could be used with any type of composite manufacture, including Automated Tape Laying (ATL), Automated Fibre Placement (AFP) and Hand Lay-Up (HLU). It could also be used with a polymer material, a metallic material or any other suitable material.

The tool and method described above could be used with any type of curing facility, such as an autoclave, a closed mould manufacturing system and oven or an Out of Autoclave (OoA) arrangement.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A method for curing a component, comprising the steps of:
- providing a cure tool having a working face and provided with a channel along a length of the working face,
- providing an inflatable member in a length of the channel,
- placing the component to be cured upon the working face of the tool,
- curing the component,
- inflating the inflatable member such that a portion of the inflatable member protrudes above the working face of the tool, thereby aiding release of the cured component from the working face of the tool.

2. A method for curing a component as claimed in claim 1, comprising the ordered steps of:
- providing a cure tool having a working face and provided with a channel along a length of the working face, then
- providing an inflatable member in a length of the channel, then
- placing the component to be cured upon the working face of the tool, then
- curing the component, and then
- inflating the inflatable member such that a portion of the inflatable member protrudes above the working face of the tool, thereby aiding release of the cured component from the working face of the tool.

3. A method of curing a component as claimed in claim 1 or claim 2, wherein the component to be cured is a composite laminate material.

4. A component that has been cured by the method of any preceding claim.

5. A component as claimed in claim 4 wherein the component is a component for an aircraft.

6. An aircraft comprising one or more components as claimed in claim 5.

7. A cure tool, the tool having a working face for placing a component to be cured upon, wherein the tool is provided with a channel along a length of the working face of the tool.

8. A cure tool as claimed in claim 7, wherein the channel is suitable for accommodating an inflatable member in a length of the channel to aid removal of the cured component from the working face.

9. A cure tool as claimed in claim 7 or claim 8, wherein the channel is an indentation in the working face of the tool.

10. A cure tool as claimed in claim 9, wherein the channel is shallow.

11. A cure tool as claimed in any of claims 6 to 10, wherein the tool is further provided with an inflatable member in a length of the channel.

12. A cure tool as claimed in claim 11, wherein, when the inflatable member is deflated, the inflatable member protrudes above the working face of the tool by a first distance.

13. A cure tool as claimed in claim 12, wherein, when the inflatable member is deflated, the inflatable member fits in the channel such that it does not protrude above the working face of the tool and the first distance is zero.

14. A cure tool as claimed in claim 12 or 13, wherein, when the inflatable member is inflated, the inflatable member protrudes above the working face of the tool by a second distance, greater than the first distance.

15. A cure tool as claimed in any of claims 11 to 14, wherein the inflatable member is a flexible pipe.

16. A cure tool as claimed in claim 15, wherein the flexible pipe is substantially cylindrical when inflated.

17. A cure tool as claimed in claim 15, wherein the flexible pipe has a shape such that a substantially flat portion of the pipe protrudes above the working face of the tool when inflated.

18. A cure tool as claimed in any of claims 7 to 17, wherein the channel is spaced apart from an edge of the working face.
